# EUROPÄISCHE PATENTSCHRIFT

(11) **EP 1 000 310 B1**
(45) Veröffentlichungstag und Bekanntmachung des Hinweises auf die Patenterteilung: **27.03.2002**
(21) Anmeldenummer: 98943693.6
(22) Anmeldetag: 14.07.1998
(51) Int. Cl.: F42B 3/12, F42B 3/18

(54) **ZÜNDEINRICHTUNG FÜR EINE INSASSENSCHUTZVORRICHTUNG EINES KRAFTFAHRZEUGES**
IGNITION UNIT FOR A PASSENGER PROTECTION DEVICE OF A MOTOR VEHICLE
UNITE D'AMOR AGE POUR UN DISPOSITIF DE PROTECTION DES OCCUPANTS D'UN VEHICULE A MOTEUR

(30) Priorität: 01.08.1997 DE 19733353
(43) Veröffentlichungstag der Anmeldung: 17.05.2000
(60) Teilanmeldung: 01121108.3
(73) Patentinhaber: NICO-PYROTECHNIK Hanns-Jürgen Diederichs GmbH & Co. KG, D-22946 Trittau (DE)
(72) Erfinder: LÜBBERS, Willi, D-22958 Kuddewörde (DE)
(74) Vertreter: Czybulka, Uwe, Dipl.-Phys.
(86) Internationale Anmeldenummer: DE9801968
(87) Internationale Veröffentlichungsnummer: WO9906786

(56) Entgegenhaltungen:
- EP-A- 0 029 671
- EP-A- 0 658 739
- DE-A- 4 429 175
- FR-A- 2 087 044
- US-A- 5 648 634

## Beschreibung

Die Erfindung betrifft eine Zündeinrichtung für eine Insassenschutzvorrichtung eines Kraftfahrzeuges, insbesondere für ein aufblasbares Aufprallschutzkissen (Airbag).

Zündeinrichtungen für Insassenschutzvorrichtungen eines Kraftfahrzeuges z.B. Gurtstraffer- oder Airbagsysteme sind aus der DE 4102275 C1 bekannt. Derartige Zündeinrichtungen weisen in einer Zündkammer als Zündelement einen niederohmigen Widerstandsdraht sowie einen Zündstoff auf, der bei ausreichender Erwärmung bzw. beim Schmelzen des Widerstandsdrahtes gezündet wird.

Die deutsche Offenlegungsschrift DE 4429175 A1 offenbart eine Zündeinrichtung mit einem Gehäuse aus einer Metall-Legierung und mit einem im Gehäuse eingelegten Passring, in dem sich ein Glasisolator befindet. In diesem Isolator sind Kontaktstifte eingeschmolzen, deren in die Zündkammer hineinragende Enden mit der Stirnseite des Isolators abschliessen und mit einem angeschweissten Widerstandsdraht verbunden sind, der als Zündelement fungiert.

Bei der bekannten Zündeinrichtung müssen die Enden der in das elektrisch isolierende Glas eingeschmolzenen Kontaktstifte mit der Stirnseite des Glasblockes zunächst plangeschliffen werden, damit der Widerstandsdraht glatt auf dem Glas aufliegt. Ansonsten kann eine Beschädigung des angeschweissten Widerstandsdrahtes aufgrund des Druckes der unter hohem Druck in die Zündkammer gefüllten Zündschichten aus festem pyrotechnischen Material nicht vermieden werden.

Diese Konstruktion hat ferner noch den Nachteil, dass der Zündstoff bei Rüttelbewegungen, Schlägen oder Temperaturwechseln durch die dabei auftretenden Kräfte und Scherbelastungen sich von dem Glaskörper ablösen kann, sodass der Kontakt zu dem Widerstandsdraht verschlechtert oder gar aufgehoben wird. In einem solchen Falle kann der Zündstoff nicht mehr sicher gezündet werden.

Weiterhin muss in Abhängigkeit vom vorgegebenen Wert des Auslösesignals der Auslöse- und Überwachungselektronik ein daran angepasster Widerstandswert des Widerstandsdrahtes verwendet werden, was wiederum in einer unterschiedlichen Länge des Widerstandsdrahtes und somit in einem unterschiedlichen Abstand der beiden Kontaktstifte voneinander innerhalb der Zündkammer resultiert. Folglich müssen die Kontaktstifte, die üblicherweise einen vom Stecker der Überwachungselektronik festen vorgegebenen Abstand voneinander haben, unterschiedlich abgekröpft werden, um diesen im Gehäuse erforderlichen Abstand zu gewährleisten.

Aus der WO 95/11421 ist eine Zündeinreichtung bekannt, die im Prinzip ähnlich aufgebaut ist, wie die vorgenannte Einrichtung gemäß der DE 44 29 175 A1 und von der bei der Formulierung des Patentanspruches 1 als Stand der Technik ausgegangen wird. Hier sind in ein elektrisch isolierendes Kunststoff- bzw. Gummimaterial zwei nagelförmige Kontaktstifte eingesetzt, wobei die planen Köpfe der Kontaktstifte mit der Oberseite des Kunststoffmateriales abschließen. Zwischen den Köpfen ist der Widerstandsdraht vorgesehen; auf den ein Primärzündstoff aufgebracht ist, der seinerseits mit dem übrigen Zündstoff in der Zündkammer in Kontakt steht.

Eine derartige Zündeinrichtung ist in der Praxis nicht zuverlässig brauchbar, da insbesondere die Dichtprobleme zwischen dem Kunststoffmaterial und den Nagelköpfen erheblich sind. Desweiteren liegt auch hier das Problem vor, dass bei auf die Zündeinrichtung einwirkenden Rüttelbewegungen, Schlägen oder Temperaturwechseln der Widerstandsdraht und der Zündstoff außer Kontakt voneinander kommen können, sodass eine sichere Zündung nicht mehr gewährleistet ist.

Ein weiteres Problem bei derartigen Zündeinrichtungen sind Überspannungen, die eine Fehlzündung, auslösen können. Daher müssen diese Überspannungen abgeleitet werden, wozu im allgemeinen als Überspannungsableiter eine Soll-Funkenstrecke ausgebildet wird. Die Soll-Funkenstrecke ist die kürzeste Strecke zwischen zwei unterschiedlichen leitenden Teilen innerhalb der Zündeinrichtung.

Bei der Zündeinrichtung gemäß der genannten DE 4429175 A1 wird eine Funkenstrecke durch einen dafür vorgesehenen galvanisch leitenden Ring gebildet, der einen Spalt zu den die Signale der Auslöse- und Überwachungselektronik übertragenden Kontaktstiften freiläßt. Etwaige Funken werden somit vom Gehäuse auf die Kontaktstifte und nicht auf den Zünddraht übertragen.

Es hat sich jedoch gezeigt, dass bei Überspannungen von bereits einigen Kilovolt (kV) diese Überspannungen nicht mehr über die Fünkenstrecke abgeführt werden können, sodass der Zündstoff durch einen zweiten oder weiteren Funken gezündet wird.

Desweiteren erfordert der Einbau des galvanisch leitenden Ringes oder äquivalenter Elemente zur Bildung einer Funkenstrecke weitere Abdichtungsmaßnahmen und kostenintensive Herstellungsschritte bei einer gleichzeitigen Vergrößerung der Gesamtabmessungen der Einrichtung.

Aufgabe der vorliegenden Erfindung ist es daher, eine Zündeinrichtung für eine Insassenschutzvorrichtung eines Kraftfahrzeuges zu schaffen, deren Herstellung einfach und weniger aufwendig ist und insbesondere den Schritt des Planschleifens der Kontaktstifte nicht erfordert.

Der Erfindung liegt zusätzlich die Aufgabe zugrunde, eine Zündeinrichtung zu schaffen, die leicht und ohne zusätzlichen Aufwand an die von den Herstellern der Überwachungselektronik vorgegebenen Werte der Auslösesignale anpassbar ist.

Ein weiteres Ziel der vorliegenden Erfindung ist es, die Zündeinrichtung mit einem integrierten Überspannungsableiter zu versehen, der keine zusätzlichen Elemente sowie Herstellungsschritte erfordert.

Diese Aufgaben werden erfindungsgemäß durch die Merkmale des Hauptanspruchs sowie hinsichtlich der Überspannungssicherheit durch die Merkmale des nebengeordneten Anspruches 7 gelöst.

Weitere Ausgestaltungen der Erfindung gehen aus den Unteransprüchen hervor.

Gemäß der Erfindung reduziert sich der Herstellungsaufwand der Zündeinrichtung durch die Verwendung von nagelförmig ausgebildeten und in die Zündkammer hineinragenden Kontaktstiften, an deren Köpfen ein Widerstandsdraht der gewünschten Länge befestigt, vorzugsweise angeschweisst wird. Um die Stabilität und Beständigkeit der Einrichtung gewährleisten zu können, wird das Gehäuse mit anfangs flüssigem Zündstoff gefüllt, der die Köpfe der Kontaktstifte und den Widerstandsdraht umhüllt und anschliessend erstarrt. Derartige Zündstoffe sind bekannt: Die deutsche Patentschrift DE 4319919 C1 beschreibt Zünd- bzw. Sprengstoffe, die bei der Herstellung fließfähig sind und später erstarren.

Aufgrund dieser Maßnahmen wirkt auf den Draht ein isotroper Druck, wodurch eventuelle druckbedingte Beschädigungen ausgeschlossen werden. Ein Planschleifen der Kontaktstifte mit dem Isolator ist auch nicht mehr erforderlich.

Als Zündstoff werden bevorzugt zunächst flüssige pyrotechnische Mischungen mit einem Binder verwendet, die anschließend erstarren.

Bei der erfindungsgemäßen Konstruktion ist es nicht erforderlich, die Enden des Widerstandsdrahtes an den Rändern der Stiftköpfe zu befestigen, da, wie es sich experimentell ergeben hat, der Widerstand überraschenderweise im wesentlichen nur von der Länge des Drahtes zwischen den Befestigungsstellen abhängt, der somit an jedem beliebigen Punkt auf der Oberseite des Nagelkopfes befestigbar ist. Aus dieser Tatsache resultiert eine einfache Anpassung des Widerstandswertes des Widerstandsdrahtes an die von den Herstellern der Auslöse- und Überwachungselektronik vorgegebenen Werte der Auslösesignale, indem die Länge des Widerstandsdrahtes und somit die Lage der Befestigungsstellen an den Köpfen der Nagelstifte variiert wird. Es ist somit nicht erforderlich, den Abstand der Kontaktstifte voneinander in der Zündkammer zu variieren, z.B. durch unterschiedliches Abkröpfen der Kontaktstifte. Diese können vielmehr gerade sein und voneinander einen konstanten Abstand aufweisen. Der Durchmesser der Köpfe der Kontaktstifte wird derart dimensioniert, dass der gesamte Wertebereich für den Widerstand des Widerstandsdrahtes für von unterschiedlichen Herstellern angebotenene Überwachungselektroniken abgedeckt wird.

Erfindungsgemäß wird ferner anstelle der bisher bekannten nahezu punktförmigen Funkenstrecken eine relativ großflächige bzw. lineare Funkenstrecke als Überspannungsableiter vorgesehen. Dies hat den Vorteil, dass bei höheren Überspannungen mehrere Funken auch gleichzeitig überspringen können und die Überspannung zuverlässig ohne Zünden der Zündeinrichtung abgeführt wird. Aufgrund der Geometrie und Anordnung der Elemente der Zündeinrichtung wird kein zusätzliches zu diesem Zweck eingebautes Element benötigt. Die Funkenstrecke gemäß der Erfindung wird bevorzugt dadurch erzielt, dass die Kontaktstifte von einem elektrisch leitenden Fortsatz des Gehäuses umgeben werden, der sich über eine erhebliche Länge der Hälse der Kontaktstifte erstreckt. Diese Länge wird z. B. etwa vergleichbar dem Umfang der Kontaktstifte gewählt.

Durch die vorliegende Erfindung wird, wie oben erläutert, das Abkröpfen der Kontaktstifte und deren Planschleifen mit dem Isolatorglas vermieden. Das Resultat ist eine erhebliche Reduzierung des Herstellungsaufwandes und der Herstellungskosten und eine einfache universelle Anpassbarkeit an die Vorgaben des jeweiligen Herstellers der Auslöse- und Überwachungselektronik. Eine weitere Reduzierung des Herstellungsaufwandes erfolgt durch den erfindungsgemäßen geometriebedingten integrierten Überspannungsableiter.

Die erfindungsgemäße Konstruktion genügt den Anforderungen der Funktionsgarantie für mindestens zehn Jahre und ist gasdicht und insbesondere heliumdicht.

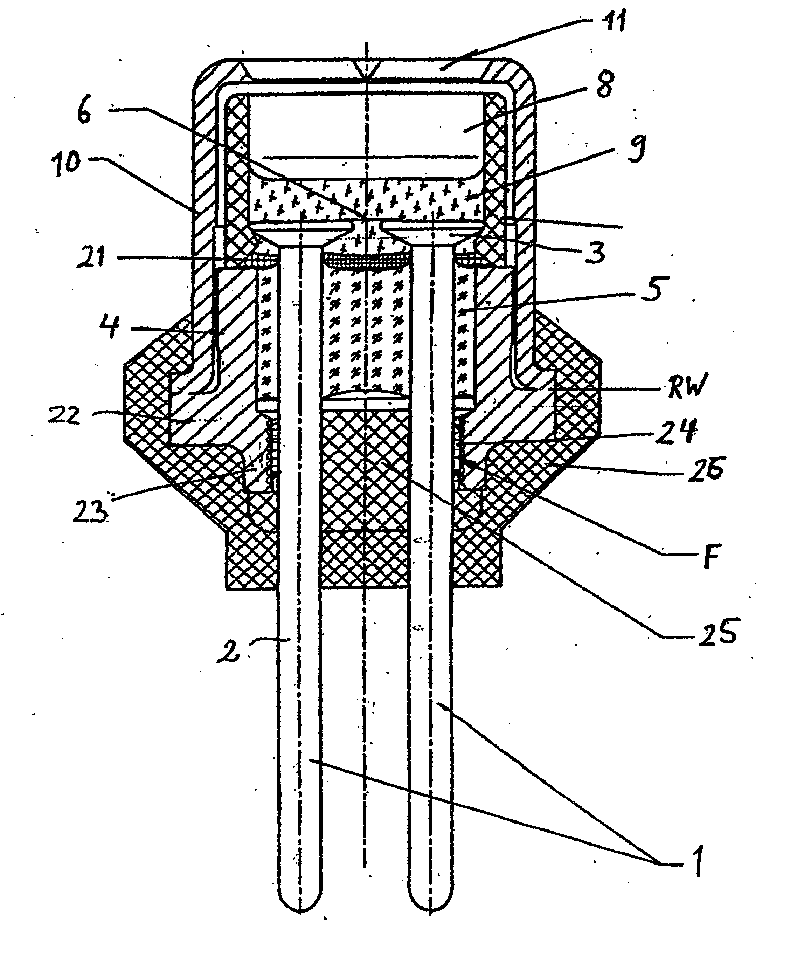

Im folgenden wird die Erfindung anhand einer Ausführungsform unter Bezugnahme auf die beigefügte Figur näher erläutert, in der eine Schnittansicht einer Zündeinrichtung mit integriertem Überspannungsableiter gemäß der vorliegenden Erfindung dargestellt ist.

Gemäß der Figur werden nagelförmig ausgebildete Kontaktstifte 1, die einen Hals 2 und einen Kopf 3 aufweisen, in einem Passring 4 in ein isolierendes Glasmaterial 5 eingeschmolzen und sitzen in definiertem Abstand voneinander fest. Die Köpfe 3 der Kontaktstifte 1 ragen aus dem Passring 4 heraus. Ein Widerstandsdraht 6 wird an den Köpfen 3 der Kontaktstifte 1 angeschweisst. Auf den Passring 2 wird eine Satzhülse 7 aufgesetzt. Diese Hülse 7 wird mit dem Passring 4 verbunden. Das dadurch entstandene Volumen bildet eine Zündkammer 8.

Auf den Boden der Zündkammer 8 wird ein Dichtmittel 21 aufgebracht; danach wird die Zündkammer mit fließfähigem Zündstoff 9 aufgefüllt, der anschliessend erstarrt. Danach wird eine Metallkappe 10 aufgesetzt, die an ihrer Stirnseite eine Berstfläche 11 aufweist und mit ihrem Rand auf der gegenüber liegenden Seite mit einem radialen Flansch 22 des Passringes 4 durch Widerstandsschweißen bei RW verbunden wird.

Auf der den Köpfen 3 der Kontaktstifte 1 abgewandten Seite des Passringes 4 weist dieser einen zylindrischen Fortsatz 23 auf, der die Kontaktstifte 1 über eine relativ lange Strecke umhüllt. Zwischen der Innenwand des Fortsatzes 23 und den Kontaktstiften 1 wird eine Funkenstrecke F ausgebildet. Der radiale Abstand zwischen dem Fortsatz 23 und dem jeweiligen Kontaktstift 1 ist kleiner als der Abstand zwischen den Köpfen 3 der Kontaktstifte 1 und der Metallkappe 10. Dadurch werden bei Überspannungen etwaige Funken vom Gehäuse 4, 10 auf die Kontaktstifte 1 und nicht auf die Köpfe 3 überspringen. Bei einer Überspannung können die Funken über den gesamten Umfang der Kontaktstifte überspringen. Die axiale Länge des Fortsatzes 23 ist so gewählt, dass bei hohen Überspannungen mehrere Funken gleichzeitig überspringen können.

Die radiale Breite der Funkenstrecke F beträgt vorzugsweise 0,3 mm, kann aber jeden geeigneten Wert zwischen 0,1 und 0,9 mm annehmen.

Der den Kontaktstiften zugewandte Innenrand des Fortsatzes kann noch aufgerauht, z. B. nach Art eines Gewindes 24 ausgebildet sein, um den Funkenübersprung zu erleichtern.

Der Fortsatz 23 wird mit einem Pfropfen 25 aus elektrisch isolierendem Material verschlossen, wobei die Funkenstrecke F frei bleibt. Der Pfropfen 25, die Kontaktstifte 1 und der der Zündkammer 8 abgewandte Rand der Kappe 10 sind von einem Kunststoffmantel 26 umhüllt, wodurch die Stabilität der Einrichtung erhöht wird und wodurch ein zusätzlicher Schutz gewährleistet wird.

Der effektive Widerstand des Widerstandsdrahtes 6 ist überraschenderweise nur eine Funktion des Abstandes zwischen den Schweißstellen an den Enden des Drahtes. Diese Tatsache ermöglicht es, bei gleichbleibendem Abstand der Kontaktstifte voneinander durch Variation des Abstandes der Schweißstellen voneinander einen dem Auslösesignal der Überwachungselektronik angepassten Widerstandswert zur Verfügung zu stellen.

## Patentansprüche

1. Zündeinrichtung für eine Insassenschutzvorrichtung eines Kraftfahrzeuges und insbesondere für ein aufblasbares Aufprallschutzkissen (Airbag) mit zwei in einem Passring (4), der mit elektrisch isolierendem Material (5) ausgefüllt ist, eingesetzten nagelförmigen Kontaktstiften (1) mit je einem Hals (2) und einem Kopf (3), wobei auf dem Passring ein kappenförmiges Gehäuse (7, 10) aufgesetzt ist, wodurch zwischen Passring (4) und Gehäuse (7, 10) eine Zündkammer (8) gebildet wird, und wobei zwischen den in der Zündkammer (8) gelegenen Oberseiten der Köpfe (3) der Kontaktstifte (1) ein elektrisch mit diesem verbundener Widerstandsdraht (6) vorgesehen und die Zündkammer (8) mit Zündstoff (9) gefüllt ist, **dadurch gekennzeichnet, daß** die nagelartigen Kontaktstifte (1) in ein von dem Passring (4) umgebenes Glasmaterial (5) eingeschmolzen sind, daß die Kontaktstifte (1) mit ihren Köpfen (3) vollständig in die Zündkammer (8) hineinragen und gemeinsam mit dem Widerstandsdraht (6) von dem bei der Herstellung der Zündeinrichtung fließfähigen und anschließend erstarrenden Zündstoff (9) vollständig umhüllt sind, wodurch der Zündstoff (9) an den Köpfen (3) der Kontaktstifte (1) verankert ist.

2. Zündeinrichtung nach Anspruch 1, **dadurch gekennzeichnet, dass** der Widerstandsdraht (6) auf der Oberseite der Köpfe (3) der Kontaktstifte (1) angeschweisst ist.

3. Zündeinrichtung nach einem der vorhergehenden Ansprüche, **dadurch gekennzeichnet, dass** die Kontaktstifte (1) gerade ausgebildet sind.

4. Zündeinrichtung nach einem der vorhergehenden Ansprüche, **dadurch gekennzeichnet, daß** das Gehäuse (4, 7, 10) eine Buchse (7) und eine diese umgebende und mit dem Passring (4) verbundene Kappe (10) aufweist, wobei diese Kappe (10) eine Berstfläche (11) aufweist und die Zündkammer (8) im Wesentlichen durch die Hülse und die Berstfläche begrenzt ist.

5. Zündeinrichtung nach einem der vorhergehenden Ansprüche, **dadurch gekennzeichnet, dass** das Gehäuse (4, 7, 10) mit dem Passring (4) aus Metall besteht.

6. Zündeinrichtung nach einem der vorhergehenden Ansprüche, **dadurch gekennzeichnet, daß** die Zündeinrichtung auf der der Zündkammer gegenüberliegenden Seite der Kontaktstifte mit einem Pfropfen aus elektrisch isolierendem Material unter Freilassung der Anschlußenden der Kontaktstifte (1) umgeben ist.

7. Zündeinrichtung für eine Insassenschutzvorrichtung eines Kraftfahrzeuges und insbesondere für ein aufblasbares Aufprallschutzkissen (Airbag), nach Anspruch 1, mit zwei in einem Passring (4), der mit elektrisch isolierendem Material (5) ausgefüllt ist, eingesetzten Kontaktstiften (1), wobei auf dem Passring ein kappenförmiges Gehäuse (7, 10) aufgesetzt ist, sodass zwischen Passring (4) und Gehäuse (7, 10) eine Zündkammer (8) gebildet wird, die mit Zündstoff (9) gefüllt ist, und.wobei zwischen den in der Zündkammer (8) gelegenen Oberseiten der Kontaktstifte (1) ein elektrisch mit diesen verbundener Widerstandsdraht (6) vorgesehen ist, **dadurch gekennzeichnet, daß** der Passring (4) aus Metall ist und einen Fortsatz aufweist, der die Kontaktstifte (1) so umgibt, daß zwischen der Innenwand des Fortsatzes (22) und den Kontaktstiften (1) eine Funkenstrecke (F) ausgebildet ist, wobei die Funkenstrecke (F) eine Dimension hat, die kleiner als der ansonsten kleinste Abstand zwischen dem elektrisch leitenden Gehäuse und den Kontaktstiften ist, und dass die Innenwand des Fortsatzes (23) aufgerauht, vorzugsweise mit einem Gewinde versehen ist.

8. Zündeinrichtung nach Anspruch 7, **dadurch gekennzeichnet, daß** die Innenwand des Fortsatzes (23) mit einem Gewinde versehen ist.

9. Zündeinrichtung nach Anspruch 7 oder 8, **dadurch gekennzeichnet, daß** die Funkenstrecke eine radiale Breite zwischen 0,1 mm und 0,9 mm, vorzugsweise etwa 0,3 mm aufweist.

10. Zündeinrichtung nach einem der Ansprüche 7 bis 9, Anspruch 7 oder 8, **dadurch gekennzeichnet, dass** der Fortsatz (23) mit einem elektrisch isolierendem Pfropfen (24) verschlossen ist, der die Funkensstrecke (F) frei lässt.

## Claims

1. Ignition device for a motor vehicle occupant protection mechanism and in particular for an inflatable impact protection cushion (airbag), with two nail-shaped contact pins (1) which are set in a gauge ring (4) filled with electrically insulating material (5), each of the contact pins (1) possessing a neck (2) and a head (3), and with a cap-shaped casing (7, 10) set on the gauge ring, thereby forming an ignition chamber (8) between the gauge ring (4) and the casing (7, 10), and there being provided between the upper faces of the heads (3) of the contact pins (1) located in the ignition chamber (8) a resistance wire (6) connected electrically to said pins (1) and the ignition chamber (8) being filled with inflammable matter (9),
**characterised in that** the nail-like contact pins (1) are fused into a glass material (5) surrounded by the gauge ring (4), that the contact pins (1) project by their heads (3) fully into the ignition chamber (8) and in common with the resistance wire (6) are completely enveloped by the inflammable matter (9), which is flowable at the time when the ignition device is manufactured and subsequently solidifies, thereby anchoring the inflammable matter (9) on the heads (3) of the contact pins (1).

2. Ignition device according to claim 1, **characterised in that** the resistance wire (6) is welded to the upper face of the heads (3) of the contact pins (1).

3. Ignition device according to either of the preceding claims, **characterised in that** the contact pins (1) are straight in shape.

4. Ignition device according to any of the preceding claims, **characterised in that** the casing (4, 7, 10) incorporates a collar (7) and a cap (10) which surrounds the latter and is joined to the gauge ring (4), said cap (10) having a rupture surface (11) and the ignition chamber (8) being substantially delimited by the collar and the rupture surface.

5. Ignition device according to any of the preceding claims, **characterised in that** the casing (4, 7, 10) with the gauge ring (4) is made of metal.

6. Ignition device according to any of the preceding claims, **characterised in that** on the side of the contact pins situated opposite the ignition chamber the ignition device is surrounded by a stopper made of electrically insulating material, leaving the terminal ends of the contact pins (1) free.

7. Ignition device for a motor vehicle occupant protection mechanism and in particular for an inflatable impact protection cushion (airbag) according to claim 1, with two contact pins (1) which are set in a gauge ring (4) filled with electrically insulating material (5), and with a cap-shaped casing (7, 10) set on the gauge ring, thereby forming between the gauge ring (4) and the casing (7, 10) an ignition chamber (8) which is filled with inflammable material (9), and there being provided between the upper faces of the contact pins (1) located in the ignition chamber (8) a resistance wire (6) which is electrically connected to said pins (1), **characterised in that** the gauge ring (4) is made of metal and incorporates an extension piece which surrounds the contact pins (1) in such a manner that a spark gap (F) is constituted between the inside wall of the extension piece (22) and the contact pins (1), the spark gap (F) being smaller in size than the smallest distance otherwise between the electroconductive casing and the contact pins, and that the inside wall of the extension piece (23) is roughened, preferably provided with a thread.

8. Ignition device according to claim 7, **characterised in that** the inside wall of the extension piece (23) is provided with a thread.

9. Ignition device according to claim 7 or 8, **characterised in that** the spark gap has a radial width of between 0.1 mm and 0.9 mm, preferably approximately 0.3 mm.

10. Ignition device according to any of claims 7 to 9, claim 7 or 8, **characterised in that** the extension piece (23) is sealed by an electrically insulating stopper (24) which leaves the spark gap (F) free.

## Revendications

1. Module d'amorçage pour dispositif de protection des occupants d'un véhicule à moteur, en particulier pour un coussin gonflable de protection contre les chocs ("Airbag"), comprenant deux connecteurs (1) en forme de clous, montés dans une bague d'ajustage (4) remplie de matériau électriquement isolant (5) et comportant chacun une pointe (2) et une tête (3), un boîtier en forme de capuchon (7, 10) étant monté sur la bague d'ajustage, une chambre d'amorçage (8) étant formée entre la bague d'ajustage (4) et le boîtier (7, 10), un fil résistif (6) étant prévu dans la chambre d'amorçage (8) entre les côtés supérieurs des têtes (3) des connecteurs (1) et relié à ceux-ci, la chambre d'amorçage (8) étant remplie de matériau explosif (9), **caractérisé en ce que** les connecteurs en forme de clous (1) sont noyés dans un matériau vitreux (5) limité par la bague d'ajustage (4), et **en ce que** les connecteurs (1) pénètrent avec leurs têtes (3) complètement dans la chambre d'amorçage (8) et sont, avec le fil résistif (6), complètement entourés de matériau explosif (9), qui est fluide lors de la fabrication du module d'amorçage et rigidifié par la suite, d'où il résulte que le matériau explosif (9) est fixé sur les têtes (3) des connecteurs (1).

2. Module d'amorçage selon la revendication 1, **caractérisé en ce que** le fil résistif (6) est fixé sur le côté supérieur des têtes (3) des connecteurs (1).

3. Module d'amorçage selon l'une des revendications précédentes, **caractérisé en ce que** les connecteurs (1) sont rectilignes.

4. Module d'amorçage selon l'une des revendications précédentes, **caractérisé en ce que** le boîtier (4, 7, 10) présente un manchon (7) et un capuchon (10) entourant celui-ci et relié à la bague d'ajustage (4), le capuchon (10) présentant une ouverture (11), la chambre d'amorçage (8) étant limitée sensiblement par le manchon et l'ouverture.

5. Module d'amorçage selon l'une des revendications précédentes, **caractérisé en ce que** le boîtier (4, 7, 10) est en métal, de même que la bague d'ajustage (4).

6. Module d'amorçage selon l'une des revendications précédentes, **caractérisé en ce qu'**il est, du côté des contacteurs opposé à la chambre d'amorçage, entouré d'un tampon de matériau électriquement isolant laissant libre les extrémités de connexion des connecteurs (1).

7. Module d'amorçage pour dispositif de protection des passagers d'un véhicule, en particulier pour un coussin gonflable de protection contre les chocs ("Airbag"), selon la revendication 1, comportant deux connecteurs (1) montés dans une bague d'ajustage (4) remplie d'un matériau électriquement isolant (5), dans lequel un boîtier en forme de capuchon (7, 10) est monté sur la bague d'ajustage, de sorte qu'une chambre d'amorçage (8), remplie de matériau explosif (9), est formée entre la bague d'ajustage (4) et le boîtier (7, 10), et dans lequel, entre les côtés supérieurs des connecteurs (1) situés dans la chambre d'amorçage (8), est prévu un fil résistif (6) électriquement relié à ceux-ci, **caractérisé en ce que** la bague d'ajustage (4) est en métal et présente un prolongement qui entoure les connecteurs (1) de sorte que, entre la paroi interne du prolongement (23) et les connecteurs (1), est formé un passage à étincelles (F), le passage à étincelles (F) ayant une dimension plus petite que l'intervalle le plus petit entre le boîtier électriquement conducteur et les connecteurs, et **en ce que** la paroi interne du prolongement (23) est rugueuse, de préférence pourvue d'un filetage.

8. Module d'amorçage selon la revendication 7, **caractérisé en ce que** la paroi interne du prolongement (23) comporte un filetage.

9. Module d'amorçage selon la revendication 7 ou 8, **caractérisé en ce que** le passage à étincelles présente une largeur radiale comprise entre 0,1 mm et 0,9 mm, de préférence environ 0,3 mm.

10. Module d'amorçage selon l'une des revendications 7 à 9, **caractérisé en ce que** le prolongement (23) est fermé à l'aide d'un tampon électriquement isolant (24) laissant libre le passage à étincelles (F).
